# EUROPEAN PATENT APPLICATION

(11) **EP 2 557 821 A1**
(43) Date of publication of application: **13.02.2013**
(21) Application number: 12178960.6
(22) Date of filing: 02.08.2012
(51) Int. Cl.: H04W 4/12, H04L 12/58

(54) **System and method for delivering messages while roaming**

(30) Priority: 12.08.2011 US 201161522769 P
(71) Applicant: Sony Ericsson Mobile Communications AB, 221 88 Lund (SE)
(72) Inventor: Bengtsson, Henrik, 227 36 Lund (SE); Stelmach, Adam, 217 57 Malmö (SE)
(74) Representative: Kraenzmer, Martin

(57) **Abstract**

A method, system and computer program for exchanging a message between a first electronic device and a second electronic device, wherein the devices are communicatively coupled to a messaging server when the devices are in a first state; and are configured to receive a notification from a push notification server when the devices are in a second state. The method includes transmitting the message from the first electronic device to the messaging server; receiving information related to whether the message was received by the second electronic device; and transmitting a short message service (SMS) message containing the message to the second electronic device through a SMS server if the message was not received by the second electronic device within a prescribed time. Prior to transmitting the SMS message, a query may be displayed on the first electronic device to request whether the user intends to send an SMS message containing the message to the second electronic device.

## Description

### RELATED APPLICATION DATA

This application claims the benefit of U.S. Provisional Application No. 61/522,769 filed August 12, 2011, which is hereby incorporated in by reference.

### TECHNICAL FIELD OF THE INVENTION

The present invention relates to a system and method for delivering messages between a first electronic device and a second electronic device using a common messaging application.

### DESCRIPTION OF THE RELATED ART

Many electronic messaging applications rely on a cloud push mechanism to deliver messages between electronic devices. For example, two exemplary cloud push mechanisms are: Cloud 2 Device Messaging (for Android devices) and Apple Notification System (for Apple devices). A cloud push mechanism relies on a constantly-open Internet Protocol (IP) connection (e.g., a hypertext transfer protocol (HTTP)) to forward notifications from the servers of third party applications to the electronic devices.

### SUMMARY

When the user of an electronic device attempts to send an electronic message to a user of another electronic device, with both devices using a compatible messaging application, it is desirable to allow the user to select another delivery method if the recipient electronic device is offline. For example, it is common when a user travels abroad for the user to turn off the data package used by the user's electronic device. This is due to the high cost associated with data packages while roaming. In such instances, the IP connection (e.g., HTTP) required for the messaging application to exchange messages between the devices using the messaging application is terminated. Accordingly, it is desirable to provide the user transmitting a message a mechanism to determine if a message was transmitted to the recipient's electronic device and, if not, provide the user with an option to deliver the message through another delivery mechanism (e.g., through a Short Message Service (SMS)).

One aspect of the invention relates to a method for exchanging a message between a first electronic device and a second electronic device, wherein the first electronic device and second electronic device are communicatively coupled to a messaging server when the devices are in a first state; and are configured to receive a notification from a push notification server when the devices are in a second state, the method including: transmitting the message from the first electronic device to the messaging server, wherein the message is intended for the second electronic device; receiving information related to whether the message was received by the second electronic device; and transmitting a short message service (SMS) message containing the message to the second electronic device through a SMS server if the message was not received by the second electronic device within a prescribed time.

Another aspect of the invention relates to prior to transmitting the SMS message, a query is displayed on a display of the first electronic device, wherein the query requests whether the user intends to send an SMS message containing the message to the second electronic device.

Another aspect of the invention relates to a query being displayed on a display of the first electronic device if a predetermined time expires prior to receiving an acknowledgement that the message was delivered.

Another aspect of the invention relates to receiving user input associated with the user's intention to transmit the SMS message.

Another aspect of the invention relates to the received information for determining whether the message was received by the second electronic device includes receiving an acknowledgement signal from the first server within the prescribed time.

Another aspect of the invention relates to the message on the display in a first manner prior to determining whether the message was received by the second electronic device and displaying the message in a second manner once determined that the message was delivered to the second electronic device.

One aspect of the invention relates to an electronic device including: a display; a packet-switched circuit operable to facilitate communication between the electronic device and a packet-switched network; a circuit-switched circuit operable to facilitate communication between the electronic device and a short message service (SMS) server; a memory, wherein the memory stores an application program in a non-transitory medium; and a processor coupled to the display, the packet-switched circuit, the circuit-switched circuit and the memory, wherein when the application program is executed by the processor, the application program is configured to: transmit a message to an application server in the packet-switched network, wherein the message is intended for another electronic device; receive information related to whether the message was received by the another electronic device; and transmit a short message service (SMS) message containing the message to the another electronic device through a SMS server if the message was not received by the another electronic device within a prescribed time.

Another aspect of the invention relates to the prescribed time being less than 10 seconds.

Another aspect of the invention relates to the display being operable to present a query to an associated user of the electronic device, wherein the query requests whether the user intends to send an SMS message containing the message to the another electronic device.

Another aspect of the invention relates to the display being presented to the user after the prescribed time passes and a information has not been received regarding whether the message was delivered to the another electronic device.

Another aspect of the invention relates to further including a user input device for operable to output a signal indicative of the associated user's selection.

Another aspect of the invention relates to the user input device being at least one selected from a keypad, a mouse, a pointer device, a touch screen display.

One aspect of the invention relates to a computer program stored on a machine readable medium, the program being suitable for transmitting messages from a first electronic device to a second electronic device, wherein when the program is loaded in memory in the first electronic device and executed causes the mobile telephone to: transmit a message from the first electronic device to a messaging application server, wherein the message is intended for the second electronic device; receive information related to whether the message was received by the second electronic device; and transmit a short message service (SMS) message containing the message to the second electronic device through a SMS server if the message was not received by the second electronic device within a prescribed time.

Another aspect of the invention relates to the program prior to transmitting the SMS message, outputs a query on a display of the first electronic device, wherein the query requests whether the user intends to send an SMS message to the second electronic device.

Another aspect of the invention relates to the program being operable to receive user input associated with the user's intention to transmit the SMS message.

Another aspect of the invention relates to the received information for determining whether the message was received by the second electronic device includes receiving an acknowledgement signal from the first server within the prescribed time.

Other systems, devices, methods, features, and advantages of the present invention will be or become apparent to one having ordinary skill in the art upon examination of the following drawings and detailed description. It is intended that all such additional systems, methods, features, and advantages be included within this description, be within the scope of the present invention, and be protected by the accompanying claims.

It should be emphasized that the term "comprise/comprising" when used in this specification is taken to specify the presence of stated features, integers, steps or components but does not preclude the presence or addition of one or more other features, integers, steps, components or groups thereof."

The term "electronic equipment" includes all equipment such as portable communication devices, mobile telephones, pagers, communicators, electronic organizers, personal digital assistants (PDA's), portable communication apparatus, smart phones or the like.

### BRIEF DESCRIPTION OF THE DRAWINGS

The foregoing and other embodiments of the invention are hereinafter discussed with reference to the drawings. The components in the drawings are not necessarily to scale, emphasis instead being placed upon clearly illustrating the principles of the present invention. Likewise, elements and features depicted in one drawing may be combined with elements and features depicted in additional drawings. Moreover, in the drawings, like reference numerals designate corresponding parts throughout the several views.
Figures 1 and 2 are exemplary schematic diagrams illustrating electronic equipment in accordance with aspects of the present invention.
Figure 3 is an exemplary network configuration in accordance with aspects of the present invention.
Figure 4 is an exemplary method in accordance with aspects of the present invention.
Figures 5-10 are exemplary signal flow charts in accordance with aspects of the present invention.
Figures 11A-11E are exemplary graphical user interfaces for use in connection with aspects of the present invention.

### DETAILED DESCRIPTION OF EMBODIMENTS

One aspect of the present invention is directed to exchanging messages between a first electronic device and a second electronic device using a messaging application that is constantly connected to a server over an Internet Protocol (IP) connection when the electronic devices in a normal operating mode. The electronic devices include an operating system and/or one or more applications that function to maintain a constantly-open Internet Protocol (IP) connection when the electronic device is in an operative state. In addition, when the devices are in a "sleep" state, the devices may be transformed back to an active state by receiving a wake-up notification from a cloud push mechanism. When the user of an electronic device attempts to send an electronic message to a user of a second electronic device, with both devices using a compatible messaging application, it is desirable to allow the user to select another delivery method if the second electronic device is offline. Accordingly, it is desirable to provide the user transmitting a message to determine if a message was transmitted to the recipient's electronic device and, if not, provide the user with an option to deliver the message through another delivery mechanism (e.g., through a Short Message Service (SMS)).

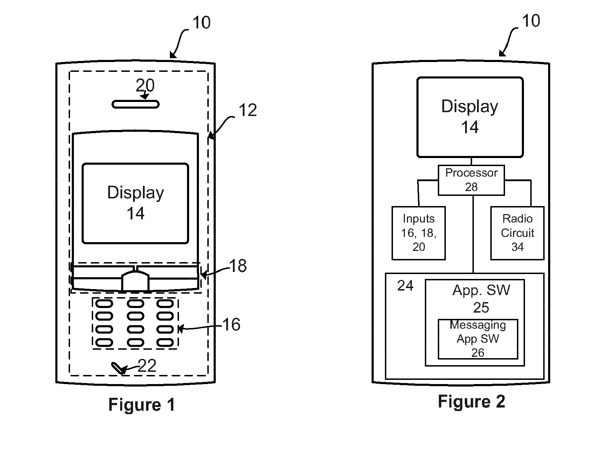

An exemplary electronic device 10 is illustrated in Figure 1. The electronic device 10 includes an operating system and/or one or more applications that functions to maintain a constantly-open IP connection when the electronic device is in an operative state. In addition, when the electronic device 10 is in a "sleep" state, the device 10 may be transformed to an active state by receiving a wake-up notification from the cloud push mechanism, as explained below.

Aspects of this invention are described primarily in the context of a mobile telephone. However, it will be appreciated that the invention is not intended to relate solely to mobile telephones and can relate to any type of electronic device. Other types of electronic equipment that may benefit from aspects of the present invention include personal computers, personal digital assistants, portable communication devices, tablets, etc.

As illustrated in Figure 1, an electronic device 10 may include a user interface 12 that enables the user easily and efficiently to perform one or more communication tasks (e.g., enter a telephone number, identify a contact, select a contact, make a telephone call, receive a telephone call, look up a telephone number, enter a text message, receive text message, enter user input information, etc). The user interface 12 of the electronic device 10 generally includes one or more of the following components: a display 14, an alphanumeric keypad 16, function keys 18, a navigation tool 19, a speaker 20, and a microphone 22. In one embodiment, the display 14 may be configured to display one or more queries to facilitate user interaction with the electronic device 10.

As shown in Figure 2, the electronic device 10 further includes one or more storage devices 24 (e.g., RAM, ROM, etc.) capable of storing application software 25. For example, the application software may include computer executable code that supports short message service, messaging applications, Internet data services, voice services, and multimedia services. In addition, the storage device 24 further includes messaging application software 26, which functions as messaging application platform to facilitate messaging communication between to electronic devices in a packet-switched network, for example. The storage device 24 is generally coupled to a processor 28. The processor 28 is programmed to perform the functionality described herein, for example, running the messaging application software 26 creating messages for transmission in a packet-switched network, receiving and transmitting such messages, creating SMS messages, transmitting SMS messages, receiving SMS messages, transmitting requests, configuring the electronic equipment for communications in various network environments, querying the user to enter information, etc., based on user information and/or commands input by the associated user to the electronic device 10.

The processor 28 also is coupled to conventional input devices (e.g., alphanumeric keypad 16, function keys 18, microphone 22, etc.), and to the display 14 and the speaker 20. The user interface 12 facilitates controlling operation of the electronic device 10 including initiating and conducting telephone calls and other communications (e.g., SMS communications, Internet communications, etc.).

The user interface 12 is also one mechanism for the user or operator of the electronic device 10 to enter characters, letters, words and/or expressions for use by one or more of the applications 26. For example, the user input device 30 may be any input device that allows a user to enter information (e.g., symbols, alphanumeric characters, words, phrases, graphic images, text images, etc.) into the electronic device 10.

The processor 28 also is coupled to a radio circuit 34. The radio circuit 34 may be used to establish communication in circuit-switched networks (e.g., for voice services, SMS, etc.) and also in packet-switched networks (e.g., VoIP, data services, chat sessions, etc.). The radio circuit 34 may be a single integrated circuit that includes circuitry for communications in circuit-switched networks and packet-switched networks. One of ordinary skill in the art will readily appreciate that while the radio circuit 34 is depicted in a single box, one or more circuits may be used to perform the functionality described herein. Furthermore, to simplify illustration, the radio circuit 34 is illustrated a single box that facilitates communication in circuit-switched and packet-switched networks, for example.

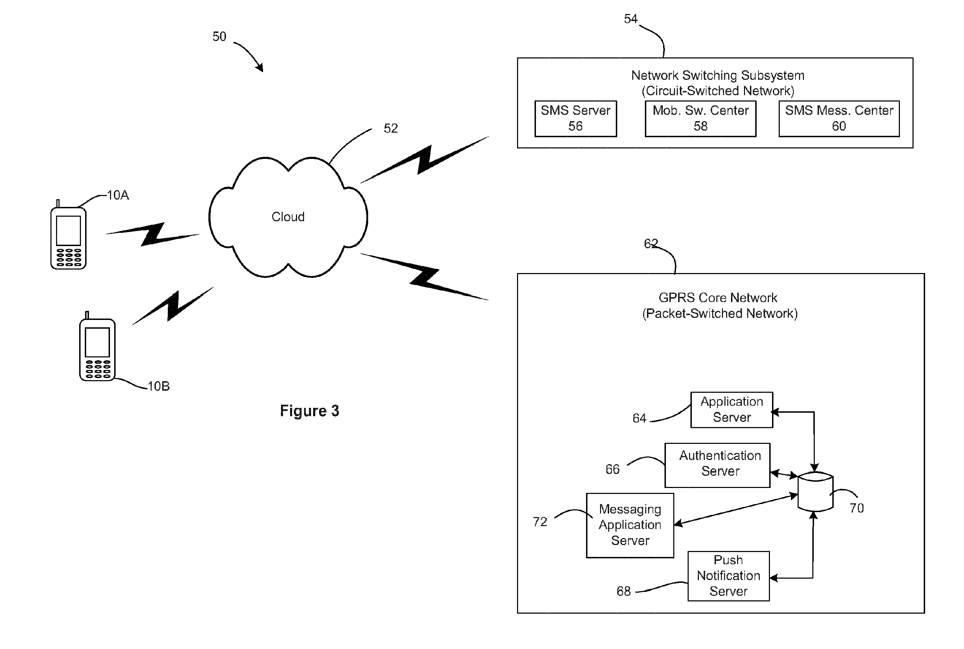

An exemplary system 50 in accordance with aspects of the present invention is illustrated in Figure 3. The system 50 includes electronic devices 10A, 10B. The electronic devices 10A, 10B include an operating system and/or one or more applications that functions to maintain a constantly-open IP connection when the electronic devices are in an operative state. In addition, when the devices 10A, 10B are in a "sleep" state, the devices may be transformed to an active state by receiving a wake-up notification from the cloud push mechanism.

The electronic devices 10A, 10B may communicate with each other through the cloud 52, which is descriptive of a base station subsystem. The base station subsystem is a section of a mobile telephone network that is responsible for handling traffic and signaling between a mobile devices and the network switching subsystem (NSS) 54. The base station subsystem generally carries out transcoding of speech channels, allocation of radio channels to electronic devices (e.g., mobile phones), paging, quality management of transmission and reception over the air interface and other tasks related to the radio network. The cloud 52 is generally capable of receiving circuit-switched information and is also equipped to handle packet-switched information (e.g., for maintaining a constantly open IP-connection between electronic devices and a server). The cloud 52 is generally able to receive information from electronic devices 10A, 10B and transmit information destined to the electronic devices 10A, 10B.

Circuit-switched information received is generally routed to the NSS 54. Such information includes voice communication, SMS, etc. The NSS 54 carries out switching functions and manages the communications between mobile phones and the public switched telephone network (PSTN). The NSS 54 is generally controlled by mobile telephone operators and allows mobile telephones to communicate with each other and telephones in the wider telecommunications network. The NSS 54 refers to the circuit-switched core network, used for traditional GSM services such as voice calls, SMS, and circuit switched data calls (e.g., non-TCP/IP data calls). One of ordinary skill in the art will readily appreciate that the NSS 54 includes such network components as, for example, a SMS server (56), mobile switching center (58), short message service center (60), etc, as is conventional. One of ordinary skill in the art will appreciate that one or more of these servers may be combined.

The communication system 50 further includes a packet-switched network 62 that provides mobility management, session management and transport for Internet Protocol (IP) packet services. In a GSM network, the packet-switched network 62 includes the general packet radio services (GPRS) core network. As used herein, packet-switched means that multiple users share the same transmission channel, only transmitting when they have data to send. Thus the total available bandwidth can be immediately dedicated to those users who are actually sending at any given moment, providing higher use where users only send or receive data intermittently. Web browsing, receiving electronic mails as they arrive and instant messaging are examples of uses that require intermittent data transfers, which benefit from sharing the available bandwidth. By contrast, in circuit-switched connections, a connection establishes a circuit, and reserves the full bandwidth of that circuit during the lifetime of the connection. Usually, GPRS data are billed per kilobyte of information transferred, while circuit-switched data connections are billed per second. The latter is because even when no data is being transferred, the bandwidth is unavailable to other potential users.

The electronic devices 10A, 10B may interact with each other and/or the various network types in accordance with any suitable communication standard, including, but not limited to, Short Message Service (SMS), Advanced Mobile Phone Service (AMPS), Digital Advanced Mobile Phone Service (D-AMPS), Global System for Mobile Communications (GSM), Code Division Multiple Access (CDMA), wireless local area network (WLAN), Bluetooth or the like. In other words, the communication system 50 is illustrated in Figure 3 for purposes of explaining aspects of the present invention, without limiting the invention to a particular communication system design, architecture or communication standard.

The packet-switched network 62 includes one or more application servers 64, an authentication server 66, a push notification server 68 and a storage device 70, such as a memory or disk drive for storing data accessible or otherwise usable by the application servers 64. The application servers 64 may be computer servers that serve a variety of functions in the communication system 50. For example, one or more of the application servers may provide routing of TCP/IP information, packets, electronic mail, voice over Internet Protocol, Internet browsing, etc.

In addition, one of the application servers may be a messaging application server 72. The messaging application server 72 coordinates the exchange of messages discussed herein and provides the necessary signaling to carry out aspects of present invention. Such signaling includes providing acknowledgment signals when a message is received and/or delivered to another electronic device, for example.

The push notification server 68 is configured to provide push notification service to selective electronic devices. Exemplary push notification services are Push Notification Service provided by Apple and Android Cloud to Device Messaging (C2DM). These services enable developers to send data from servers to their applications on Android devices. The service provides a mechanism that servers can use to tell mobile applications to contact the server directly, to fetch updated application or user data, for example. The push notification service handles all aspects of queuing of messages and delivery to the target application running on the target device. An application on an Android and/or Apple device does not need to be always connected to the messaging application server 72 to receive messages. The system, through the push notification server 68 will wake-up the messaging application on the electronic via an Internet broadcast when the message arrives, for example.

As noted above, the electronic device 10 (also referred to herein as electronic device 10A and electronic device 10B) is capable of sending messages (e.g., text messages) through a SMS message over a circuit-switched network and also chat over a packet-switched network. Typically, when a user desires to enter a text message, the user activates an application locally stored in the electronic device 10A, 10B and the application initiates a messaging service. One of ordinary skill in the art will readily appreciate that the various manufacturers of electronic equipment may provide different mechanisms (e.g., hardware and/or software) in order to activate a suitable messaging service on electronic devices.

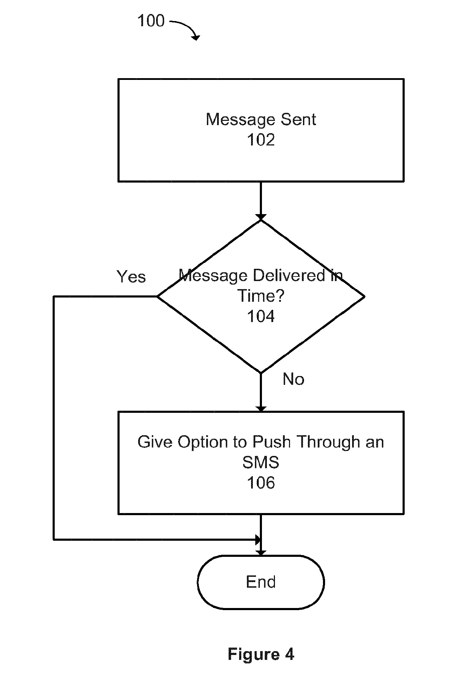

Referring to Figure 4, an exemplary method 100 for exchanging messages between a first electronic device and a second electronic device is illustrated in accordance with aspects of the present invention. It should be noted that it is assumed that the first electronic device and second electronic device are communicatively coupled to a first server (e.g., a push notification server) when the devices are in a first state ("on"); and are configured to receive a wake-up notification from a suitable server when the devices are in a second state (e.g., a "sleep" state). At block 102, the first electronic device transmits a message to the messaging application server 72. The message is intended for the user of the second electronic device. The message may be any type of message. For example, the message may be words, phrases, or any desirable message and may include graphics, images and/or video. Exemplary message types include SMS messages, multimedia messaging service (MMS) messages, etc. The messaging application server 72 includes information related to the status of electronic devices loaded with the messaging application 26, for example.

At block, 104, the electronic device 10A determines whether the message was received by the second electronic device. This may be accomplished in a variety of ways. For example, the messaging application server 72 is aware of electronic devices that are using the messaging application 26. Accordingly, the messaging application server 72 may use a look-up-table, database or other suitable data structure to determine if the second electronic device is in an "on" state. In another embodiment, if an acknowledgement signal is not received from the messaging application server 72 within a predetermined time, the messaging application 26 may assume that the second electronic device (e.g., 10B) is in an "off" state, for example or unavailable. There are a variety of reasons that an electronic device may unavailable. For example, the electronic device may be powered off; the messaging application 26 may be turned off, but the electronic device is and has an Internet connection; the application is on, but is disconnected from the server by the server or application to save sockets on the messaging application server, and/or battery life or reduce data traffic; the electronic device may be in a bad coverage area (e.g., no Internet connection); the electronic device is in a roaming network with data traffic turned "off"; the electronic device is a network (e.g., a 2G network without a data connection); the client is de-installed; and the application is turned off.

At block 106, the user is given the option to push through an SMS message to the second electronic device. For example, as set forth below, a query may be displayed on the display 14 to ask the user if the user desires to transmit the message in the form of an SMS message. User input is received through one of the user input devices of the electronic device (e.g., user interface 12, display 14 (in case of touch screen display), keypad 16, function keys 18, navigation tool 19, and microphone 22). In general, it is preferable to query the user of the electronic device attempting to send the message prior to sending the SMS message, as opposed to automatically transmitting the SMS message, due to the additional cost generally charged for SMS messages. If the user desires to send an SMS message to the user of the second electronic device, the message is transmitted in an SMS message to the second electronic through the SMS message center server 60.

The above method utilizing a cloud push mechanism and SMS notification will work in the same way in most cases, except when the electronic device is in a roaming network with data turned off; and when the electronic device is in a 2G network with a data connection. In these cases, the SMS message will reach the intended recipient, but cloud push will not. Hence, SMS push works better, but has the drawback of cost. One problem is that the application server or the initiating electronic device generally does not have knowledge regarding the offline state of the intended recipient device.

The following use cases are used to illustrate various embodiments of the claimed invention. In each of the below examples,

### Example 1

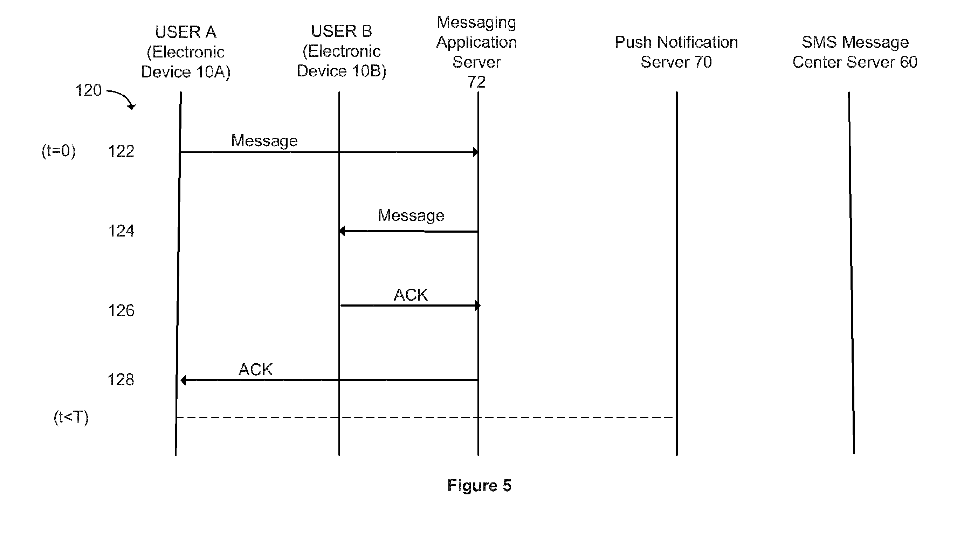

The electronic devices of User A and User B are both in an "on" state, meaning that the electronic devices have a constant IP connection to the messaging application server (72) and a compatible messaging platform (e.g., messaging application 26). An exemplary method 120 is illustrated for this situation in Figure 5. At block 122, the first electronic device 10A transmits a message intended for the second electronic device 10B to the messaging application server 72. This is referred to time t=0 with increasing time moving down the signaling flow chart. At block 124, the messaging application server 72 transmits the message to electronic device 10B. At block 126, the electronic device 10B sends an acknowledgement signal to the messaging application server 72 indicating that the message was received. At block 128, the messaging application server transmits an acknowledgement signal to the electronic device 10A indicating that the message was delivered to electronic device 10B. In this case, the acknowledgement signal from the messaging application server 72 is received prior to a prescribed time (T).

The prescribed time (T) may be any desirable time. In order to give sufficient time for network latency, a desirable prescribed time is less than 10 seconds. Preferably, the prescribed time is less than a few seconds. A person of ordinary skill in the art will appreciate that any desired time may be used in accordance with aspects of the present invention. As may be appreciated from the above, the prescribed time (T) may be used by the electronic device 10A as an indicator of whether the second electronic device 10B is on-line or off-line.

### Example 2

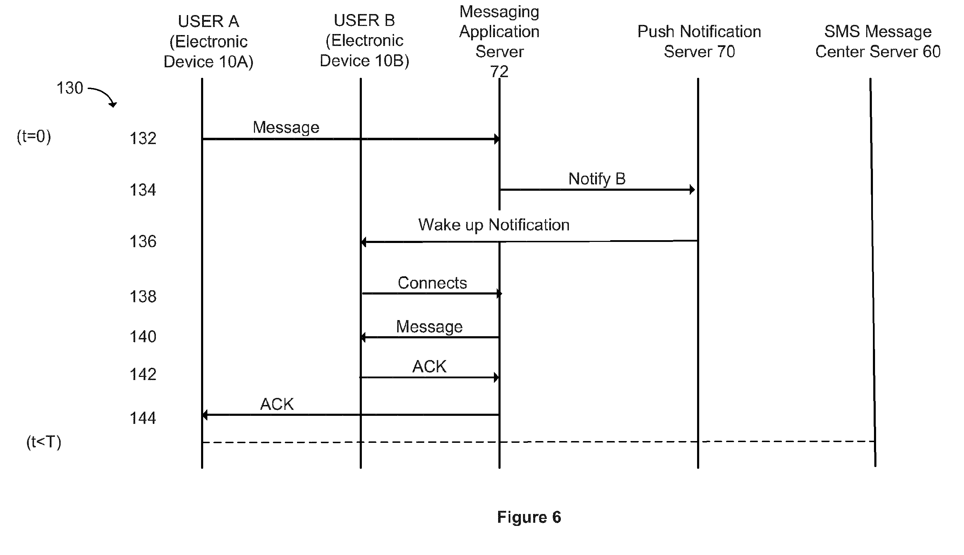

Figure 6 illustrates another exemplary method 130 in accordance with aspects of the present invention. In Figure 6, it is assumed that electronic device 10B is disconnected from the messaging application server 72 when user A (through electronic device 10A) sends the message, but that electronic device 10B has a working Internet connection. Such a situation may arise in the following situations, for example: the messaging application 26 is turned off, but the electronic device is "on" and has an Internet connection; the messaging application 26 is operative on the electronic device (e.g., electronic device 10B), but the electronic device 10B is disconnected from the messaging application server 72 or application 26 to save socket connections on the server 72, disconnected to save battery life on the electronic device (e.g., electronic device 10B); or to limit data traffic, etc.

At block 132, the first electronic device 10A transmits a message intended for the second electronic device 10B to the messaging application server 72. As noted above, this is referred to time t=0 with increasing time moving down the signaling flow chart. At block 134, the messaging application server 72 is aware that the recipient device (e.g., electronic device 10B) is not connected to the messaging application server 72. Therefore, at block 134, the messaging application server 72 transmits a notification to a push notification server 68. In turn, at block 136, the push notification server 68 transmits a wake-up notification signal to the recipient device (e.g., electronic device 10B). In response to the wake-up notification signal, at block 138, the electronic device 10B connects to the messaging application server 72. At block 140, the message is transmitted from the messaging application server 72 to the intended recipient device (e.g., electronic device 10B). At block 142, the recipient device (e.g., electronic device 10B) sends an acknowledgement signal to the messaging application server 72 indicating that the message was received. At block 144, the messaging application server transmits an acknowledgement signal to the electronic device 10A indicating that the message was delivered to the recipient device. Again, in this case, the acknowledgement signal from the messaging application server 72 is received at the initiating electronic device (e.g., electronic device 10A) prior to expiration of the prescribed time (T).

### Example 3

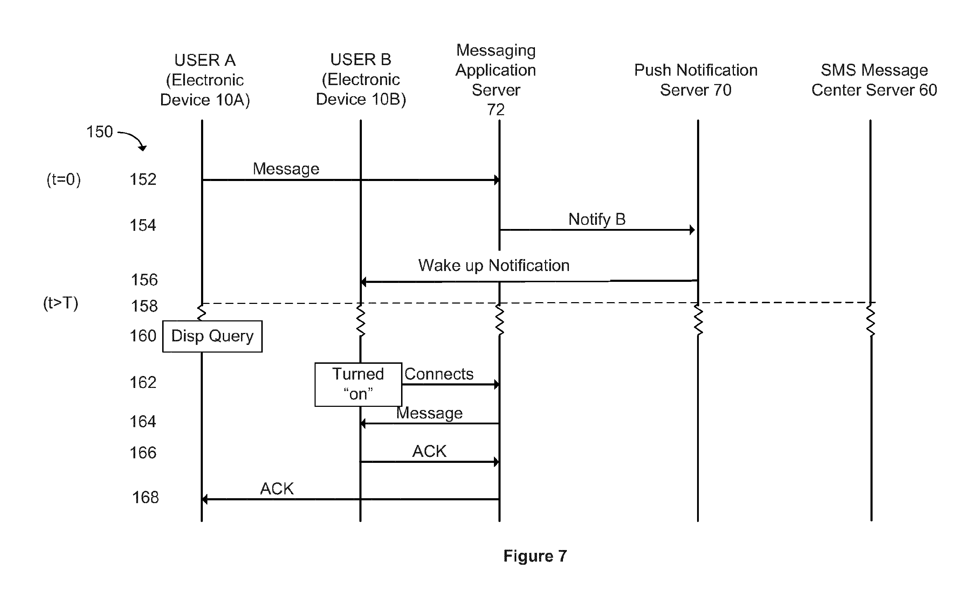

Figure 7 illustrates another exemplary method 150 in accordance with aspects of the present invention. In this embodiment, blocks 152-156 are identical to blocks 132-136 described above. At block 158, the prescribed time expires (indicated by the dashed line) without the initiating electronic device (e.g., electronic device 10A) receiving an acknowledgement signal that the message was delivered by the messaging application server 72. At block 160, a query may be presented to the user to determine whether the user desires to send an SMS message to recipient device (e.g., electronic device 10B). In this case, the user of electronic device 10A chooses not to push an SMS message to electronic device 10B. At block 162, electronic device 10B is turned on and connects to the messaging application server 72. Blocks 164-168 are identical to blocks 140-144 discussed, except that they occur after the prescribed time. In this embodiment, the message is delivered when the electronic device 10B is switched to the "on" state and connects to the Internet.

### Example 4

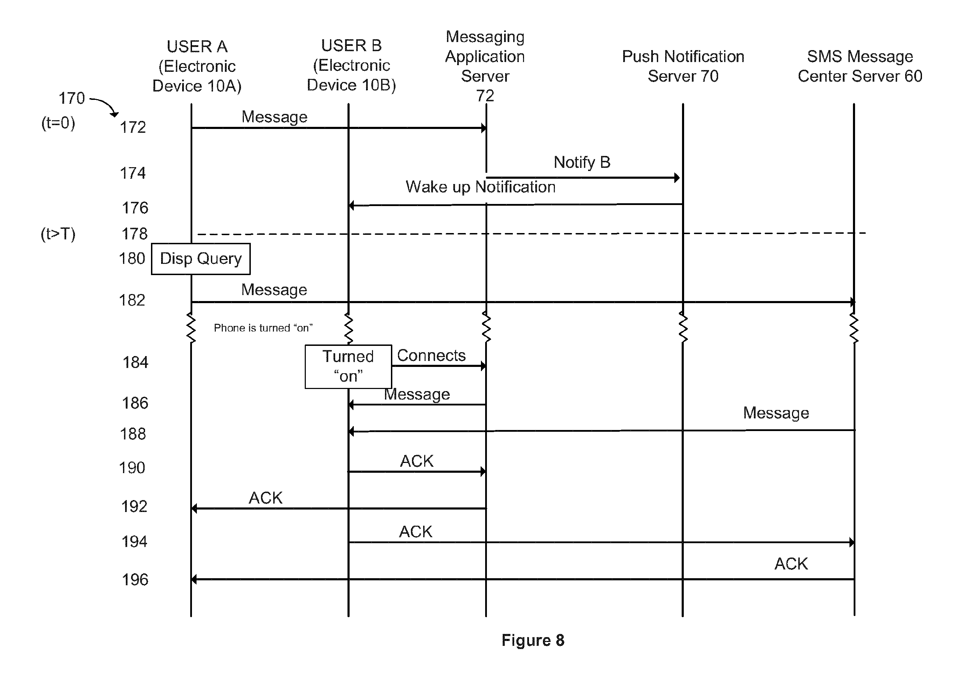

Figure 8 illustrates another exemplary method 170 in accordance with aspects of the present invention. In this embodiment, blocks 172-180 are identical to blocks 152-160 in Example 3, which is described above, except that at block 180, when the query is presented to the user to determine whether the user desires to send an SMS message to recipient device (e.g., electronic device 10B), the user of electronic device 10A chooses to push an SMS message to electronic device 10B. Accordingly, at block 182, electronic device 10A transmits an SMS message containing the desired message to be transmitted to electronic device 10B through the SMS server 60. At block 184, prior to the message being delivered by the SMS server 60 to electronic device B, electronic device B is activated and connects to the messaging application server 72. At block 186, the message is transmitted from the messaging application server 72 to electronic device B. At block 188, the message in the form of an SMS message is transmitted from the SMS server 60 to electronic device B. At block 190, electronic device 10B transmits an acknowledgement signal to the messaging application server 60, which indicates the message was received. At block 192, the messaging application server transmits an acknowledgement signal to electronic device 10A that the message was delivered to the intended recipient through the messaging application server. At block 194, electronic device 10B transmits an acknowledgement signal to SMS server 60, indicating that the SMS message was received. At block 196, the SMS server 60 transmits an acknowledgement signal to electronic device 10A, which indicates that the message, sent in an SMS message, was received by electronic device 10B. In this example, the user of electronic device 10A chooses to push the SMS message to electronic device 10B. The SMS message will not reach electronic device 10B sooner, since the push notification server 68 is able to wake-up electronic device 10B quickly. Thus, in this case, the messages from the messaging application server 72 and the SMS server 60 arrive at the electronic device 10B at or near the same time frame.

### Example 5

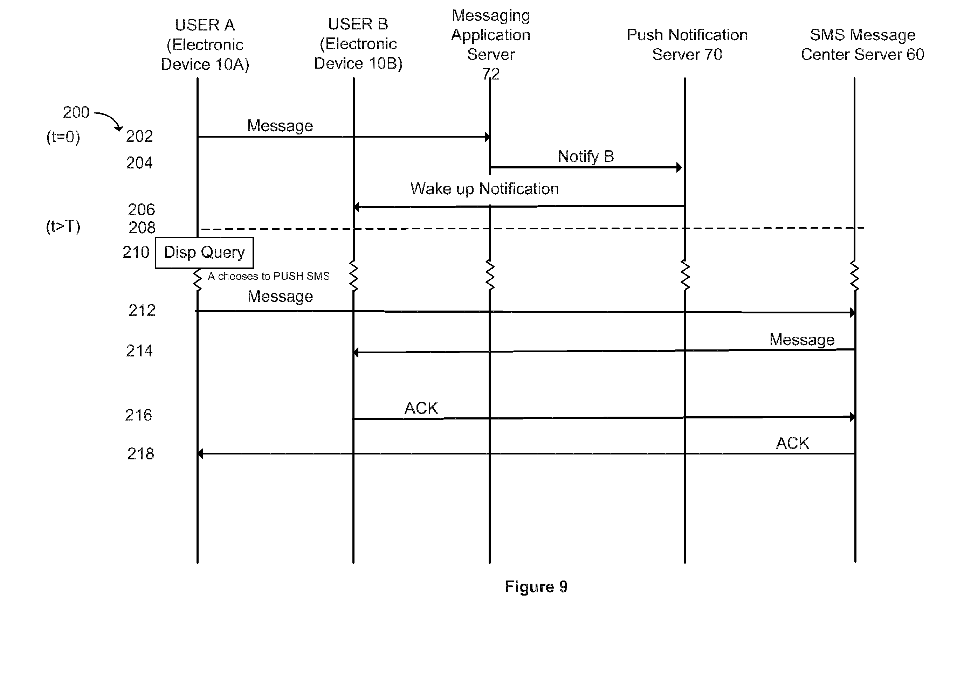

Figure 9 illustrates another exemplary method 200 in accordance with aspects of the present invention. In this embodiment, electronic device 10B is disconnected from the messaging application server 72, but the electronic device 10B is operative. This situation is common when a user of an electronic device is traveling abroad and does not wish incur additional roaming fees for data. In this embodiment, blocks 202-210 are identical to blocks 172-180 in Example 4. At block 210, when the query is presented to the user to determine whether the user desires to send an SMS message to recipient device (e.g., electronic device 10B), the user of electronic device 10A chooses to push an SMS message to electronic device 10B. This generally occurs by the user using a portion of the user interface 12 to make the user's intention known to the electronic device 10A. Accordingly, at block 212, electronic device 10A transmits an SMS message containing the desired message to be transmitted to electronic device 10B through the SMS server 60. At block 214, the message in the form of an SMS message is transmitted from the SMS server 60 to electronic device B. At block 216, electronic device 10B transmits an acknowledgement signal to SMS server 60, indicating that the SMS message was received. At block 218, the SMS server 60 transmits an acknowledgement signal to electronic device 10A, which indicates that the message, sent in an SMS message, was received by electronic device 10B. Thus, in this example, electronic device 10A is able to push through the message via SMS and the message reaches electronic device 10B directly even though electronic device 10B is not connected to Internet (and thus does not have a constant IP connection to the push notification server 68).

### Example 6

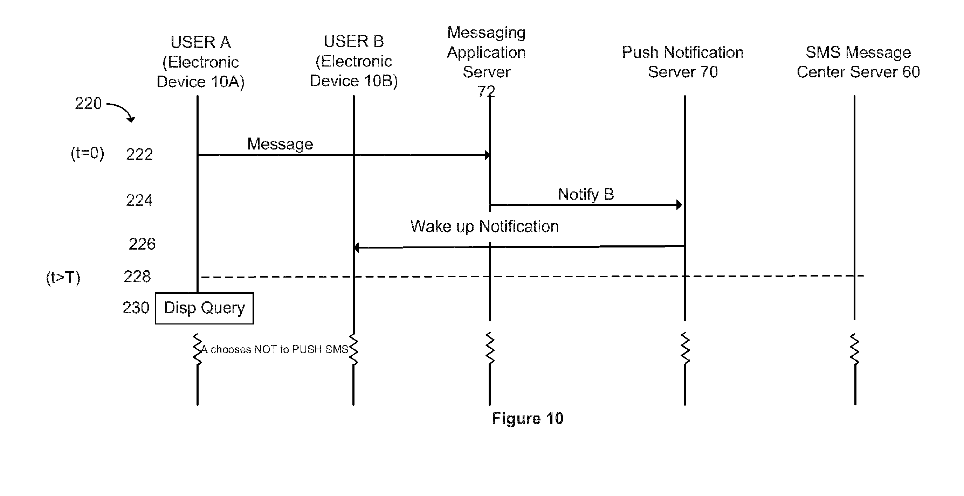

Figure 10 illustrates another exemplary method 220 in accordance with aspects of the present invention. In this embodiment, electronic device 10B is disconnected from the messaging application server 72, but the electronic device 10B is operative. As set forth above, this situation is common when a user of an electronic device is traveling abroad and does not wish incur additional roaming fees. In this embodiment, blocks 222-230 are identical to blocks 202-210 in Example 5, except that in this embodiment, the user of electronic device 10A chooses not to push the message through the SMS. Therefore, in this instance, the message will not be delivered until the user obtains an Internet connection or otherwise connects to the messaging application server 72. Once the user connects to the messaging application, the message will be delivered through the messaging application server 72 to the electronic device 10B.

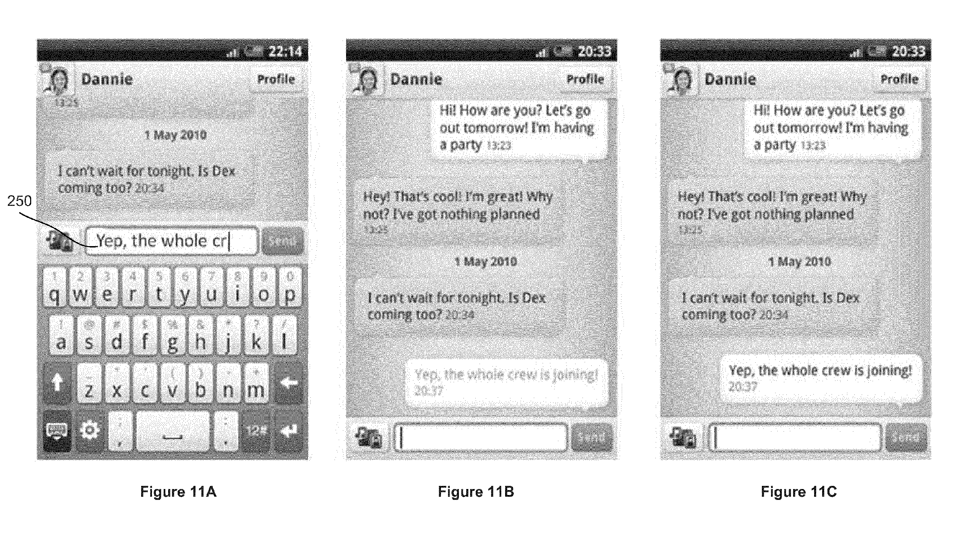

An exemplary graphical user interface incorporating aspects of the present invention is illustrated in Figures 11A-11E. For purposes of this disclosure, it will be assumed that the graphical user interface is presented on displays **14** of the electronic devices 10A, 10B. Referring to Figure 11A, the messaging application 26 includes a graphical user interface that allows the user to send and receive messages with other electronic devices. The user of electronic device 10A is responding to a message (e.g., I can't wait for tonight. Is Dex coming too?) received from a user named "Dannie". In response to this message, a virtual keyboard may be displayed to allow the user of electronic device 10A to respond to the message. Alternatively, a key pad or other user input device may be used to create a message.

A dialogue box 250 may be presented that illustrates one or more portions of the message that is currently being entered by the user. Once the user sends the message, the electronic device 10A transmits the message to the messaging application server 72, as discussed above. Once the message is transmitted, the message may be positioned in another portion of the display, as illustrated in Figure 11B. It should be noted that the message may have an indication (e.g., a different color or font than other text) until an acknowledgement signal is received for the message or the prescribed time (T) has expired. In Figure 11B, the text is presented in a gray font, while other messages are presented in a black font, for example. In Figure 11C, the acknowledgement signal has arrived. Accordingly, the message text is presented in a similar manner as other messages (e.g., in a black font).

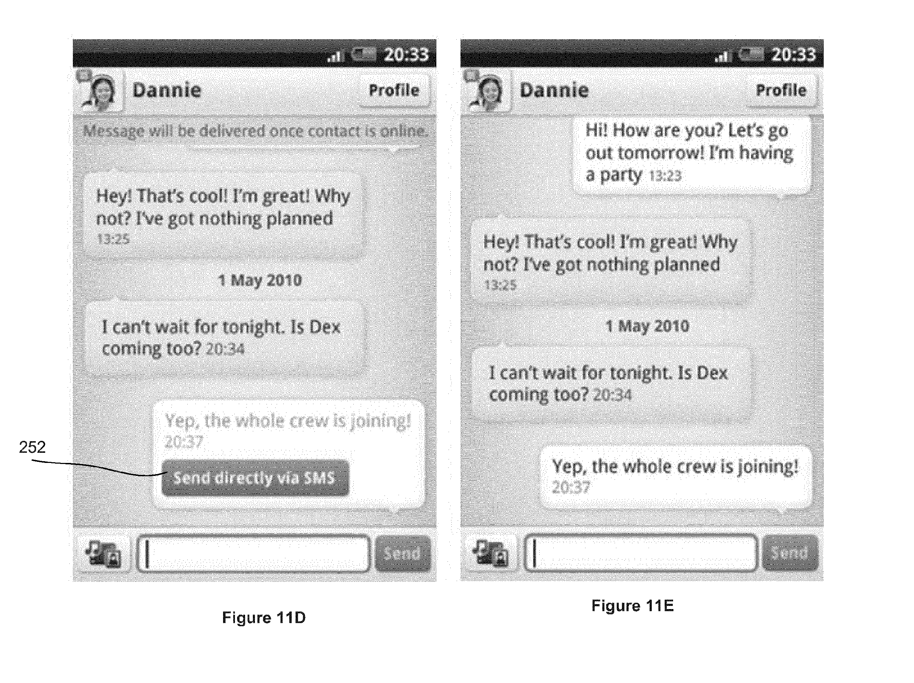

Referring to Figure 11D, after the prescribed time (T) has expired and an acknowledgement signal has not arrived, the electronic device associated with Dannie (e.g., electronic device 10B) is considered off-line. The user of electronic device 10A is presented with a query 252 to send the message as a SMS message or wait until Dannie's electronic device connects to the messaging application server 72. If Dannie has turned her electronic device off, it does not help to send the SMS, since the message will only reach Dannie when her electronic device is turned "on". If Dannie is roaming, as discussed above, it may be beneficial to send the SMS message, since Dannie is available and the SMS message will arrive to Dannie faster than the message sent through the messaging application, for example.

Referring to Figure 11E, the user has either clicked the query "Send directly via SMS" (from Figure 11D) or the message was confirmed either through Dannie's electronic device having turned on and connected to the messaging application server or the SMS message received by the Dannie, for example. This is evidenced by the message transforming from the message text having a first color (e.g., gray) that corresponds to a message not received to a second color (e.g., black), which corresponds to the message received. A person of ordinary skill in the art will readily appreciate that a variety of mechanisms may be used to indicate to a user that a message has been delivered to another user using the methodology described herein.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means". It should also be noted that although the specification lists method steps occurring in a particular order, these steps may be executed in any order, or at the same time.

## Claims

1. A method for exchanging a message between a first electronic device and a second electronic device, wherein the first electronic device and second electronic device are communicatively coupled to a messaging server when the devices are in a first state; and are configured to receive a notification from a push notification server when the devices are in a second state, the method comprising:
transmitting the message from the first electronic device to the messaging server, wherein the message is intended for the second electronic device;
receiving information related to whether the message was received by the second electronic device; and
transmitting a short message service (SMS) message containing the message to the second electronic device through a SMS server if the message was not received by the second electronic device within a prescribed time.

2. The method of claim 1, wherein prior to transmitting the SMS message, a query is displayed on a display of the first electronic device, wherein the query requests whether the user intends to send an SMS message containing the message to the second electronic device.

3. The method of claim 1, wherein a query is displayed on a display of the first electronic device if a predetermined time expires prior to receiving an acknowledgement that the message was delivered.

4. The method of claim 3, further including receiving user input associated with the user's intention to transmit the SMS message.

5. The method of claim 1, wherein the received information for determining whether the message was received by the second electronic device includes receiving an acknowledgement signal from the first server within the prescribed time.

6. The method of claim 1, further including the message on the display in a first manner prior to determining whether the message was received by the second electronic device and displaying the message in a second manner once determined that the message was delivered to the second electronic device.

7. An electronic device comprising:
a display;
a packet-switched circuit operable to facilitate communication between the electronic device and a packet-switched network;
a circuit-switched circuit operable to facilitate communication between the electronic device and a short message service (SMS) server;
a memory, wherein the memory stores an application program in a non-transitory medium; and
a processor coupled to the display, the packet-switched circuit, the circuit-switched circuit and the memory, wherein when the application program is executed by the processor, the application program is configured to:
transmit a message to an application server in the packet-switched network, wherein the message is intended for another electronic device;
receive information related to whether the message was received by the another electronic device; and
transmit a short message service (SMS) message containing the message to the another electronic device through a SMS server if the message was not received by the another electronic device within a prescribed time.

8. The electronic device of claim 7, wherein the prescribed time is less than 10 seconds.

9. The electronic device of claim 7, wherein the display is operable to present a query to an associated user of the electronic device, wherein the query requests whether the user intends to send an SMS message containing the message to the another electronic device.

10. The electronic device of claim 9, wherein the display is presented to the user after the prescribed time passes and a information has not been received regarding whether the message was delivered to the another electronic device.

11. The electronic device of claim 7 further including a user input device for operable to output a signal indicative of the associated user's selection.

12. The electronic device of claim 11, wherein the user input device is at least one selected from a keypad, a mouse, a pointer device, a touch screen display.
